# EUROPEAN PATENT SPECIFICATION

(11) **EP 0 759 110 B1**
(45) Date of publication and mention of the grant of the patent: **04.02.1998**
(21) Application number: 95919707.0
(22) Date of filing: 09.05.1995
(51) Int. Cl.: E04B 1/84

(54) **SOUND ABSORPTION SYSTEMS FOR INNER WALLS, CEILINGS, ETC., IN BUILDINGS AND METHOD FOR THE PRODUCTION OF SUCH SOUND ABSORPTION SYSTEMS**
SCHALLSCHLUCKENDE SYSTEME FÜR INNENWÄNDE, DECKEN USW. IN GEBÄUDEN UND VERFAHREN ZUR HERSTELLUNG SOLCHER SCHALLSCHLUCKENDEN SYSTEME
SYSTEMES D'ABSORPTION ACOUSTIQUE POUR MURS INTERIEURS, PLAFONDS, ETC., DANS DES BATIMENTS, ET PROCEDE DE FABRICATION DE CES SYSTEMES

(30) Priority: 10.05.1994 SE 9401615
(43) Date of publication of application: 26.02.1997
(73) Proprietor: Fellert, John, 502 55 Boras (SE)
(72) Inventor: Fellert, John, 502 55 Boras (SE)
(74) Representative: Kristiansen, Alf P.
(86) International application number: SE9500505
(87) International publication number: WO9530804

(56) References cited:
- EP-A- 0 194 961
- EP-A- 0 441 296
- DE-A- 2 452 383
- DE-A- 3 932 472
- FR-A- 2 539 164
- FR-A- 2 639 386
- SE-C- 210 391

## Description

### TECHNICAL FIELD:

The present invention relates to a sound absorption system for inner walls, ceilings, e t c, in buildings, especially large buildings such as concert halls and the like, and the invention also comprises a method for the production of such sound absorption systems.

### BACKGROUND OF THE INVENTION:

Different buildings are constructed in different ways. They are large or small and made of material such as stone, concrete, bricks, wood, e t c, and therefore they have different strength, heat insulation properties and sound absorption properties in walls, floors and ceilings. In buildings where the heat insulation properties and the sound absorption properties are insufficient, it is possible to cover walls and ceilings with further material to improve these insufficient properties. Often the ceiling is lowered and the walls are built out, for example by means of cross bars and sound insulating materials. The material often consists of fibre board, minaret plates and gypsum and the insulation may consist of different porous materials such as mineral wool.

The work of improving buildings in this respect is often expensive and even if the materials for the renovation could be good, they are often unsatisfactory in some ways, especially with regard to the sound absorption ability.

The Swedish patent 210391 describes a method for producing a sound absorbing plate which consists of plates of mineral wool on which an organic fiber-forming material is sprayed in melted, solved or emulgated shape whereby the organic material after being applied form thin threads.

It has therefore long been a problem when rebuilding buildings to be able to cover walls and ceilings in such a way that the sound absorption will be satisfactory. Especially in concert halls, conference rooms, assembly halls, offices and the like, this has resulted in a nonuniform covering of the walls as the acoustics from some walls must be different than shut from other walls and the like. It has therefore long been a desire to create a sound absorption system for such rooms which satisfies both the acoustics and the other properties including also the visible surface.

### SUMMARY OF THE INVENTION:

By means of the present invention, a sound absorption system for inner walls, ceilings, e t c, in buildings has been achieved which is characterized by a first layer of mineral wool suitable to be attached to the wall, ceiling, e t c, by gluing, screwing or the like, and a second layer of substantially cotton fibres on the first layer applied for example by spraying.

According to the invention, it is suitable that the first layer consists of a plate having a thickness of 2-4 centimetres and the second layer of cotton has a thickness of 2-3 millimetres.

The second layer may, according to the invention, contain different colours and pattern-forming granules or fibres.

The invention also includes a method for the production of a sound absorption system for inner walls, ceilings, e t c, in buildings, which method is characterized by in that on a first layer of mineral wool in the shape of a plate or plates suitable to be attached by gluing, possibly by means of profiles, and/or screws to the support, a second layer consisting of a cotton suspension is applied preferably by spraying on in one or more steps.

According to the invention, it is further suitable that joints, corners or the like of the mineral wool plates, are filled, covered by glass fibre strips by gluing or reinforced by for example plates, whereupon a barrier paint layer is applied at suitable locations and the cotton suspension is sprayed on in two steps with intermediate drying.

### BRIEF DESCRIPTION OF THE DRAWINGS:

The invention will be described in the following in greater detail in connection with the attached drawings in which
- Fig. 1: shows an example of a sound absorption system mounted on a wall or a ceiling in a corner;
- Fig. 2: shows the sound absorption system according to the invention mounted on cross bars;
- Fig. 3: shows the sound absorption system mounted on an outer corner in a building, and
- Fig. 4: shows a diagram of the absorption factor α as a function of the frequency obtained by absorption tests of sound in the sound absorption system according to the invention.

### DETAILED DESCRIPTION OF PREFERRED EMBODIMENTS:

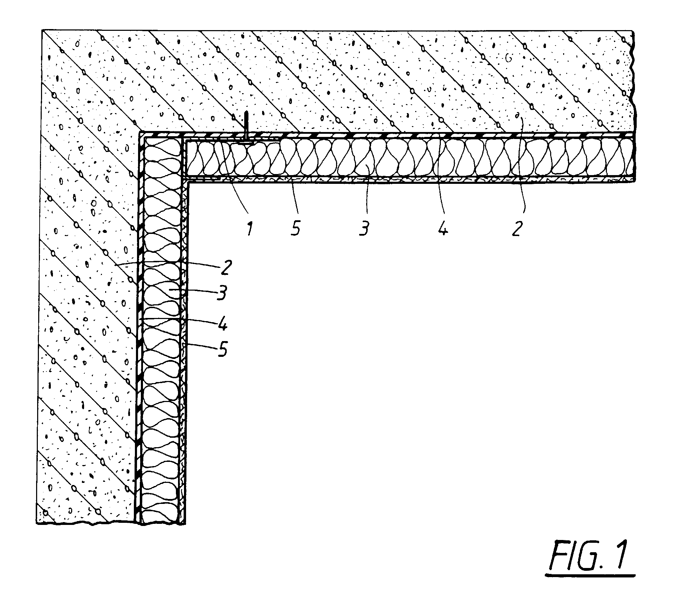

Fig. 1 shows how the sound absorption system according to the invention is mounted in an inner corner. This is achieved by firstly mounting a profile 1 in a suitable way, for example using a screw, depending on the material in the wall 2. Thereafter the absorption plates 3 are glued on by means of a suitable setting mortar 4. This setting mortar can be of various kind but it should have a certain elasticity. The mineral wool plates 3 should be smooth on that side which faces the room and be rough on that side upon which the setting mortar is to be applied. The setting mortar is conveniently applied by means of a toothed putty knife and worked into the plate. Thereafter the plate is pressed against the support by means of a finishing board to avoid pressure marks when the plate is pressed against the support. The plates are mounted edge to edge with bands with as even joints as possible. All outer window corners, door corners and other outer corners are reinforced with U-shaped plate lists, glass fibre web or reinforcing putty.

A self-adhesive glass fibre strip is suitably glued on all joints without any puttying. Surfaces which are puttied in connection with glass fibre web should be provided with a barrier paint so that no undesired colour will be visible through the outer layer or an uneven suction occurs in the support.

After mounting the absorption plates 3, the surface layer 5 is applied suitably by spraying. This consists of fibres, preferably cotton fibres. This spraying is suitably carried out in two steps, whereby an amount of cotton layer corresponding to approximately 40% of the total amount is applied in a first step and the rest, 60%, in a second step. Between the spraying the surface should be allowed to dry somewhat, approximately 2-3 hours or to the next day.

If an even surface is wanted, it may be smoothed after the first spraying by means of a finishing board. Such smoothing can also take place after the final application, but if a structured surface is wanted, both the first and the second smoothing down can be spared.

The fibre mixture which is sprayed on should consist of cotton having a suitable grinding degree and water. The mixture may also contain textile fibres, plant fibres from pine, cypress and other conifers. Different additions, such as mica, biolite, muscovite and silicaber may advantageously be added to obtain different effects. The cotton fibres which are commercially available are simply mixed with water to a suitable consistency. Fibres based on cellulose other than cotton fibres may also be used, but they have not been shown to give the same quality of the layer. The cotton fibres give the proper elasticity while other cellulose fibres have a tendency to give a hard shrink-sensitive surface which easily cracks.

The total thickness of the cotton layer should be 2-3 millimetres. The support, namely the absorption plate of mineral wool, exists most often in a thickness of 2 or 4 centimetres. The type of mineral wool which is used is not critical and it can also consist of glass wool or stone wool. The density is in the order of 60 kilos per m² but it may also be higher or lower, depending on the desired acoustics.

The cotton layer may be coloured with the colour which is desired. It may be mixed with granules or fibres of colouring material and patterns may be created in the surface by using these different colourings, especially by spraying in two steps with an intermediate drying.

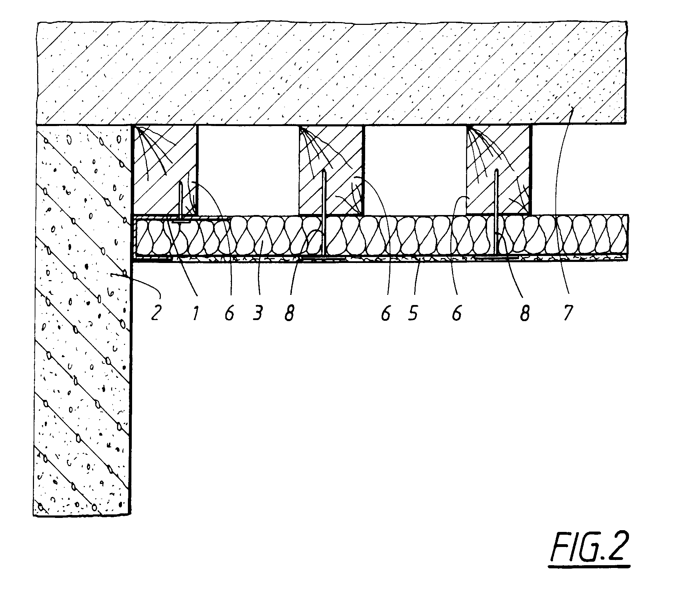

Fig. 2 shows another embodiment of the invention. Here the absorption plate 3 has been mounted on cross bars 6 on a ceiling 7. The absorption plate 3 has in this case been mounted by means of profiles 1 and self boring screws 8 and plastic washers.

In the same way as in Fig. 1 cotton coating 5 is sprayed on in two layers. It is in this case important that the profiles and the plastic washers are completely covered by the cotton layer. The drying time between the two applications of the cotton layers is dependent on the humidity and temperature in the air, but 2-3 hours can sometimes be sufficient, whereas sometimes it is necessary to wait until the next day with the second spraying if the air humidity is high.

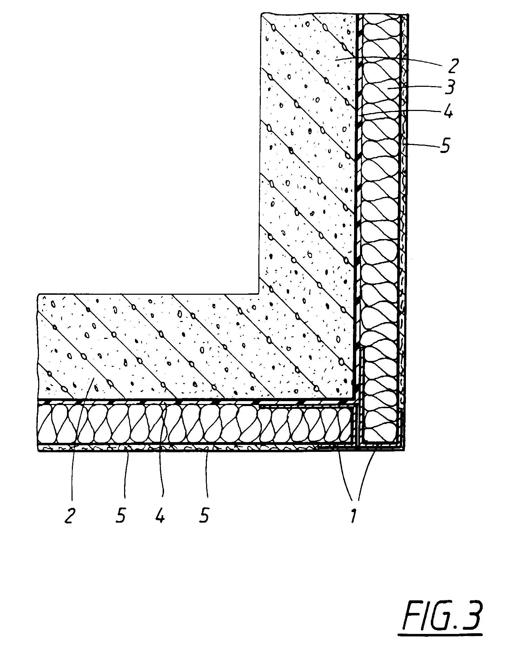

Fig. 3 shows how the sound absorption system has been applied on an outer corner. The outer corner has been reinforced with profiles 1 but the absorption plates 3 have been attached to the walls 2 only by means of setting mortar 4. The cotton layer 5 has been applied in the same way as above.

Even though three embodiments have been shown above, it is to be realized that these are only examples of how the invention can be used. Other solutions and special solutions can be used without departing from the scope of the patent protection.

By means of the present invention, the possibility to renovate premises whilst maintaining the structure and obtaining a uniform colouring of the whole premises has been achieved. Joint free, acoustic ceilings and walls are obtained which has been desired for a great number of years. The mounting may be made directly on an existing surface or on cross bars. A further advantage with the cotton fibres is that they do not become static electrically charged, thus they do not attract dust or dirt.

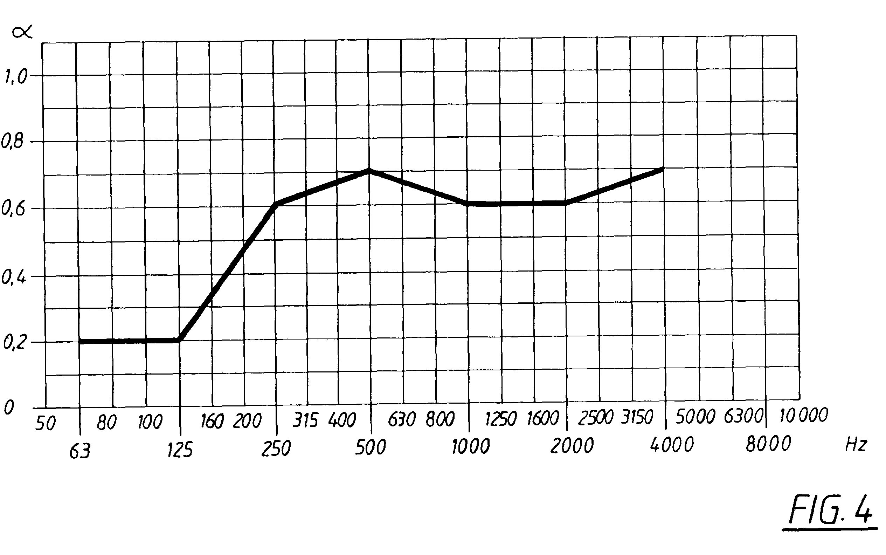

Fig. 4 shows the effect on the sound absorption system according to the present invention as an absorption factor a as a function of the sound frequency in hertz (Hz).

The measurements have been performed according to Swedish standard SS 5264.

The test results of aftersound times are given in the following table.

| Frequency Hz | A-time, seconds | A-time, seconds |
|---|---|---|
| | Before renovation | After renovation |
| 63 | 3,7 | 1,8 |
| 125 | 3,0 | 1,7 |
| 250 | 2,5 | 0,8 |
| 500 | 2,2 | 0,7 |
| 1000 | 2,2 | 0,7 |
| 2000 | 2,0 | 0,7 |
| 4000 | 1,5 | 0,6 |

The measurements have been made before and after the renovation. To represent the renovation, a slotted plate 20 millimetre, glued to the ceiling with approximately a 3 millimetre cotton layer was been mounted.

As appears, a very good absorption curve is obtained also for lower sound frequencies.

The invention is not limited to the embodiments shown but can be varied in different ways within the scope of the claims.

## Claims

1. Sound absorption system for inner walls, ceilings, e t c, in buildings, **characterized** by a first layer (3) of mineral wool being attached to the wall, ceiling, e t c, (2, 6, 7) by gluing, screwing, or the like, and a second layer (5) of substantially cotton fibres, on the first layer (3).

2. Sound absorption system according to claim 1, **characterized in** that the first layer (3) consists of a plate having a thickness of 2-4 centimetres and the second layer (5) of cotton having a thickness of 2-3 millimetres.

3. Sound absorption system according to claim 1 or 2, **characterized in** that the second layer (5) contains different colours or pattern creating granules or fibres.

4. Method for the production of a sound absorption system according to any of the claims 1-3, **characterized in** that a first layer (3) of mineral wool in the shape of a plate or plates is attached by gluing (4) possibly by assistance of profiles (1) and/or screws (8) to the support (2, 6, 7), whereupon a second layer (5) of a cotton suspension is applied in one or more steps.

5. Method according to claim 4, **characterized in** that joints and corners, of the mineral wool plates, are filled, that glass fibre strips are glued thereon, or they are reinforced by plates, whereupon a barrier colour is applied at suitable locations and the cotton suspension is sprayed on in two steps with intermediate drying.

## Patentansprüche

1. Schallschlucksystem für Innenwände, Decken und so weiter in Gebäuden, **gekennzeichnet durch** eine erste Schicht (3) aus Mineralwolle, die an der Wand, Decke und so weiter (2, 6, 7) durch Kleben, Aufschrauben oder dergleichen befestigt wird, und eine zweite Schicht (5) im wesentlichen aus Baumwollfasern, die auf der ersten Schicht (3) durch Aufsprühen aufgebracht wird.

2. Schallschlucksystem nach Anspruch 1, **dadurch gekennzeichnet,** daß die erste Schicht (3) aus einer Platte mit einer Dicke von 2 bis 4 cm besteht und die zweite Schicht (5) aus Baumwolle eine Dicke von 2 bis 3 mm hat.

3. Schallschlucksystem nach Anspruch 1 oder 2, **dadurch gekennzeichnet,** daß die zweite Schicht (5) verschiedene Farben oder ein Körner oder Fasern erzeugendes Muster enthält.

4. Verfahren zur Herstellung eines Schallschlucksystems nach einem der Ansprüche 1 bis 3, **dadurch gekennzeichnet,** daß zunächst eine Schicht (3) aus Mineralwolle in der Form einer Platte oder von Platten durch Aufkleben (4), gegebenenfalls mit Unterstützung von Profilen (1) und/oder Schrauben (8), auf dem Untergrund (2, 6, 7) befestigt wird und eine zweite Schicht (5) durch Aufsprühen einer Baumwollsuspension in einer oder mehreren Stufen aufgebracht wird.

5. Verfahren nach Anspruch 4, **dadurch gekennzeichnet**, daß Fugen und Ecken der Mineralwollplatten gefüllt, Glasfaserstreifen daraufgeklebt oder sie durch Platten verstärkt werden, worauf an geeigneten Stellen Sperrschichtfarbe aufgebracht und die Baumwollsuspension in zwei Stufen mit Zwischentrocknen aufgesprüht werden.

## Revendications

1. Système d'absorption acoustique destiné à des murs intérieurs, des plafonds, etc. dans des bâtiments, caractérisé par une première couche (3) de laine minérale fixée au mur, au plafond, etc. (2, 6, 7) par collage, vissage ou analogue, et une seconde couche (5) de fibres pratiquement formées de coton, placée sur la première couche (3) et appliquée par pulvérisation.

2. Système d'absorption acoustique selon la revendication 1, caractérisé en ce que la première couche (3) est formée d'une plaque ayant une épaisseur de 2 à 4 cm et la seconde couche (5) de coton a une épaisseur de 2 à 3 mm.

3. Système d'absorption acoustique selon la revendication 1 ou 2, caractérisé en ce que la seconde couche (5) contient des granulés ou fibres créant des dessins ou couleurs qui diffèrent.

4. Procédé de fabrication d'un système d'absorption acoustique selon l'une des revendications 1 à 3, caractérisé en ce qu'une première couche (3) de laine minérale sous forme d'une ou plusieurs plaques est fixée par collage (4) éventuellement avec l'assistance de profilés (1) et/ou de vis (8) au support (2, 6, 7), et une seconde couche (5) est appliquée par pulvérisation d'une suspension de coton en une ou plusieurs étapes.

5. Procédé selon la revendication 4, caractérisé en ce que les joints et coins des plaques de laine minérale sont remplis, des bandes de fibres de verre sont collées pardessus ou sont renforcées par des plaques, une couleur protectrice est appliquée à des emplacements convenables et la suspension de coton est pulvérisée en deux étapes avec séchage intermédiaire.
